Europäisches Patentamt

European Patent Office

Office européen des brevets

(11) Publication number: **0 235 903**
**A1**

## (12) EUROPEAN PATENT APPLICATION

(21) Application number: **87300575.5**

(51) Int. Cl.⁴: **C22C 1/08**

(22) Date of filing: **22.01.87**

A request for correction one letter has been filed pursuant to Rule 88 EPC. A decision on the request will be taken during the proceedings before the Examining Division (Guidelines for Examination in the EPO, A-V, 2.2).

(30) Priority: **22.01.86 JP 8930/86**
**15.04.86 JP 84891/86**
**15.04.86 JP 84893/86**

(43) Date of publication of application:
**09.09.87 Bulletin 87/37**

(84) Designated Contracting States:
**AT BE CH DE ES FR GB GR IT LI LU NL SE**

(71) Applicant: **Inabata Techno Loop Corporation**
**3-1-8, Shibuya, Shibuya-ku**
**Tokyo(JP)**

(72) Inventor: **Inabata, Tadao**
**No. 203, 22-11, Nishiazabu 2-chome**
**Minato-ku Tokyo(JP)**

(74) Representative: **Deans, Michael John Percy et al**
**Lloyd Wise, Tregear & CO. Norman House**
**105-109 Strand**
**London WC2R OAE(GB)**

(54) **Light metallic composite material and method for the production thereof.**

(57) A light metallic composite material comprising a matrix consisting of aluminium, magnesium, zinc, copper or alloys of any of these materials and a fine granular additive dispersed in said matrix. The granular additive consists of heat-resistant glasses, sintered metals or ceramic materials such as silica, alumina and zirconia. The additive can be provided in the form of hollow spheres; it is added to the matrix material in an amount of 10%-70% by volume of said matrix material.

# FIG. I

# LIGHT METALLIC COMPOSITE MATERIAL AND METHOD FOR THE PRODUCTION THEREOF

The present invention relates to light composite materials.

Recently, a number of light metals and light composite materials have been developed, which have improved material characteristics. However, it is difficult to make materials of these kinds lighter in weight and at the same time higher in strength because of an incompatibility between these factors, by the use of conventional arts of selecting a specific combination of metallic constituents each separately having a considerable density. Conventional composite materials such as ones containing carbon fibres are also insufficient in this respect.

An object of the present invention is to provide a light metallic composite material which is light in weight and has other useful properties.

According to one aspect of the present invention, there is provided a light metallic composite material, comprising: a matrix consisting of a light metallic material; and fine granular additive dispersed in said matrix, said additive having a density smaller than that of said matrix, and heat resistance enough to withstand a heating temperature at which said additive is composited with said matrix.

According to an alternative aspect of the present invention, we provide a method of producing a light metallic composite material, comprising the steps of:

(a) adding fine granular additive to a light metallic matrix material, said additive having a density smaller than that of said matrix material;

(b) heating the mixture obtained in step (a) to a predetermined temperature so as to composite said additive with said matrix; and

(c) forming the composited mixture into a desired shape and solidifying same.

The invention is hereinafter more particularly described by way of example only with reference to the accompanying drawings and photographs, in which:-

Fig. 1 is a fragmentary schematic sectional view showing an example of a light metallic composite material according to the present invention;

Fig. 2 is an enlarged schematic sectional view showing a microsphere which may be employed in a composite material according to the present invention;

Fig. 3 is a photomicrograph of a practical example of a composite material according to the present invention, which contains microspheres coated with aluminium; and

Fig. 4 is a photomicrograph of another practical embodiment of a composite material according to this invention and containing copper-coated microspheres.

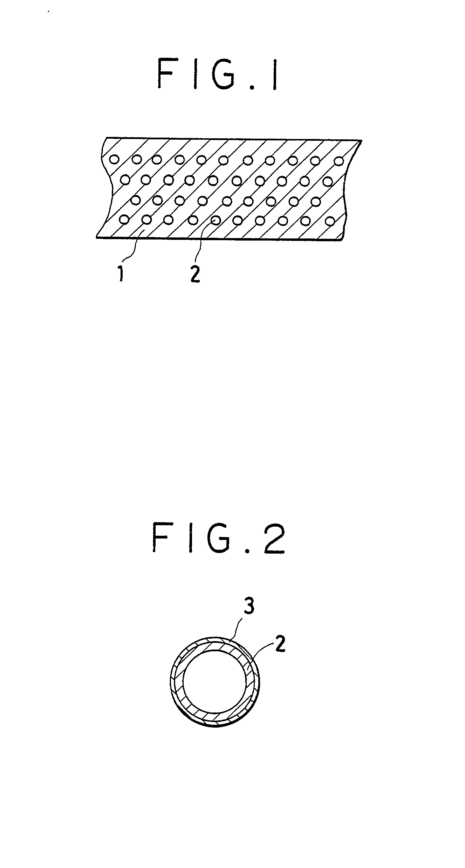

The embodiment of light metallic composite material according to the present invention shown in Fig. 1 is composed of a matrix 1 into which a fine granular additive in the form of microspheres 2, which are small in size and weight and high in heat resistance, is mixed and dispersed. The matrix 1 is composed of light materials such as aluminium, magnesium, zinc, alloys of these materials, copper, brass, bronze; and most suitably of light metal alloys such as an aluminium alloy. In one practical embodiment we employed an aluminium base extruded material A-6063 (Japanese Industrial Standard) as the matrix 1. The microspheres employed in the practice of the present invention may be prepared in substantially the same manner as conventional microspheres or microcellular fillers of the kind which have recently been developed as fillers to be mixed into plastics and high molecular compounds and employed essentially for reinforcing materials of the kind having low mechanical strength and low melting point. For instance, the microspheres may be prepared by a melting method wherein pressurized air is blown into a molten raw material which flows from a heating furnace so that the material is formed into fine particles each of which contains therein an air bubble, or by a sintering method wherein a volatile component of granular raw material is vaporized to be contained in respective molten or softened granules during a sintering process. However, as distinct from conventional microspheres, the microspheres 2 we employ preferably comprise one or more of: heat-resistant glasses having a high melting point, such as borosilicate glass, silica glass, and silica-alumina-calcium glass; sintered metals; and ceramic materials such as silica, alumina and zirconia, so that the microsphere 2 has its softening point and melting point higher than those of prior proposed microspheres, and chemical stability to constituents of the matrix such as Al, Mg, and Si. In one practical embodiment, the microspheres were composed of borosilicate glass. Further, in order to harmonize various characteristics of the resultant composite material such as lightness, strength, and damping ability, the microspheres are suitably prepared so as to have a diameter less than 300 microns and are formed as hollow spheres filled with a gas such as air.

In manufacturing a practical example of the composite material, at first, the microspheres 2 were added to molten metal of the aluminium base extruded material A-6063 in an amount of 10 to 70 % by volume of the matrix material, and 30 %, for instance. Thereafter, the molten metal was stirred sufficiently to distribute the microspheres. Thereafter, the mixture was cooled to obtain an aluminium-microsphere composite billet. As mentioned above, the microspheres 2 are added into the molten matrix metal, and are thus subject to heating. However, the microspheres 2 are formed of material which can withstand a heating temperature, and are hardly broken in the mixing/compositing process. As a result the microspheres 2 are uniformly dispersed in the matrix to form a composite material. If desired, the composite billet is then heated and subjected to various forming processes such as rolling, extrusion, and heat treatments such as quenching or tempering, to obtain a final product.

Although an individual microsphere itself cannot withstand an unidirectional external force and is thus liable to be broken, it becomes mechanically stabilized against the external forces exerting along various directions when once it is mixed in the matrix 1 because of its outer spherical shape. Further,gas in the interior of the microsphere 2 expands and contracts in volume with thermal expansion and contraction of the matrix 1, to provide the microsphere with thermal stability. As a result, the microspheres maintain their integrity both in the manufacturing process and in the composite billet and through subsequent forming processes, being hardly broken.

In an alternative procedure for making an example of a composite material in accordance with the present invention and also having a matrix 1 and microspheres 2 dispersed therein, the microspheres 2 are added to matrix material in powder form. This is quite effective to avoid lack of uniformity in the distribution of the microspheres 2 in the matrix 1 which might occur due to the considerable difference in density therebetween.

We shall now describe a practical example of such a method.

First, the powder for the matrix 1 and the microspheres 2 were prepared. In the present practical example we employed powders of aluminium with 5% magnesium having a predetermined particle size, and microspheres of borosilicate glass having a melting point falling within a range of 1,000°C to 1,200°C and a diameter less than 300 microns, and formed into hollow spherical shapes. The amount of microspheres 2 added was within the range of 10% to 70% by volume of the matrix materials, 20%, for instance. These limits correspond to the preferred smallest value above which the desired lightness requirement of the composite material is fulfilled, and the largest value below which the desired strength requirement is fulfilled, respectively.

Next, the matrix 1 and the microspheres 2 are stirred to form a uniform mixture, and the mixture is heated to a fluidized state in which part of the mixture is softened whereas the remaining part thereof is kept in its solid state, no microsphere being softened or melted. That is, the mixture is heated to a predetermined temperature (620°C - 630°C in the present example) and maintained at this temperature for a required period of time so that the ratio of that part of the mixture which is in a liquid or near liquid state to the remaining solid state part is adjusted to a predetermined value, 50% by volume, for instance, or, in other words, the mixture as a whole becomes fluidized. The reasons for limiting the heating temperature to the specific range and fluidizing the mixture so that the liquid/solid ratio of the heated mixture comes to a predetermined value are as follows: If the whole of the matrix is in its liquid state, the matrix powder material and the microspheres become separated from each other because of the considerable density difference therebetween. This makes it impossible to achieve a desired uniform distribution of the microspheres in the matrix. On the other hand, an excessively small ratio of the liquid part to the solid part makes it difficuilt for the two elements of the mixture to be sufficiently composited with each other.

When the mixture is heated to the above-mentioned predetermined temperature so as to achieve the desired liquid/solid ratio, the desired fluidized state of the mixture is established, wherein the entirety of the microspheres are kept in a solid state whereas 30% to 70% of the matrix material is fluidized, resulting in the heated mixture being partly softened and having an appropriate viscosity. As a result, the matrix powder material and the microspheres are composited with each other in a positive manner, and do not tend to separate despite the considerable difference in their densities. Thus, a uniform distribution of the microspheres 2 in the martix is achieved. The heated mixture has a preferred fluidity.

The heated mixture with its desired fluidity is formed into a desired shape with ease and then cooled to obtain an aluminium-microsphere composite billet. Thereafter, if desired, the billet is subjected to various forming process such as rolling, extrusion, stamping after being heated, and to subsequent heat treatment such as quenching or tempering, so as to obtain a final product.

As in the first composite material production method described above, the microspheres maintain their integrity and can withstand a pressure greater than 100 Kg/cm², for instance.

Incidentally, the heated mixture having fluidity may be formed into the composite billet directly by the use of press dies.

In an alternative procedure, the microspheres 2 may be subjected to a surface treatment. More specifically, as shown in Fig. 2, a microsphere is formed at its outer surface with a coating, so as to improve mechanical strength of the microsphere 2 itself and hence the resultant composite material, and preferably, to provide the composite material with other useful properties arising from its multi-material nature. A constituent of the coating is suitably selected from aluminium, zinc, copper, silver, iron or ferrite. For Example, an aluminium coating 3 was provided in one practical example.

In the manufacturing process, the coating 3 is first formed on the microsphere 2. For instance, after being cleaned, the microspheres 2 of borosilicate glass are floated and dispersed in an evaporation chamber wherein an aluminium metal is evaporated and deposited on outer surfaces of the respective microspheres to form an aluminium coating 3 thereon. Thereafter, the coated microspheres 2 is an amount of 20% by volume of the matrix material are added to matrix powder material of an aluminium -5% magnesium alloy having appropriate particle sizes, and the thus obtained mixture is stirred to achieve a uniform distribution of the microspheres in the matrix powder. Then, as described above, the mixture is heated to a predetermined temperature to be composited and fluidized, and is formed into a composite billet, and is further formed into a final product through various processes. The fluidized mixture may be also formed into the final product directly by the use of press dies.

We find that microspheres 2 formed with the coating 3 have improved mechanical strength, and thus have an even greater integrity than the uncoated microspheres described above in the various forming process for obtaining the composite billet. Further, when the coating 3 is chosen to have physical properties which are the same as or similar to those of the matrix material, it is possible to improve material intimacy between the matrix component and the microsphere component, and hence also the ease of forming the heated mixture and the strength of the resultant composite material.

In the following there are shown, by way of example, the results of measurement of two characteristic properties, i.e., Vickers hardness numbers and densities for ten samples of each three composite materials A, B and C.

The composite materials A, B and C were produced from aluminium matrix powders and microspheres which consist of 65 % Si -35% Al and a balance of inevitable impurities and have average particle sizes of 75 microns, 100 microns and 75 microns respectively for A, B and C, and are coated with Al, Cu and Zn, respectively.

Vickers hardness numbers for ten samples of the first composite material A were 24.4317, 24.7903, 25.8182, 24.5652, 28.1303, 24.6549, 28.5738, 25.7222, 22.9911 and 24.7903, the average value thereof being 23.2468. Vickers hardness numbers for the second material B were 19.9341, 20.7421, 17.2365, 21.3084, 22.2024, 24.1678, 21.4172, 22.8701, 18.8377 and 17.9964, the average value being 20.6713. Further, Vickers hardness numbers of the third material C were 25.6266, 25.0185, 22.9911, 22.5129, 22.2024, 24.3432, 23.8225, 23.4012, 25.6266 and 24.5206, with the average value being 24.0066. As a control the Vickers hardness number of a sample obtained by solidifying molten aluminium and then forging the same was 22.3399.

Furthermore, the average density of ten samples of the materials A, B and C were 1.7958 g/cm³, 1.6961 g/cm³ and 1.8711 g/cm³, respectively, while aluminium has a density of 2.6989 g/cm³. Since the respective specific gravities of the Al, Cu and Zn coated microspheres were 0.85, 0.80 -0.85 and 0.80 -0.90, the volume ratio of microsphere in the composite materials were calculated to be 46.4%, 51.5% and 42.5% respectively.

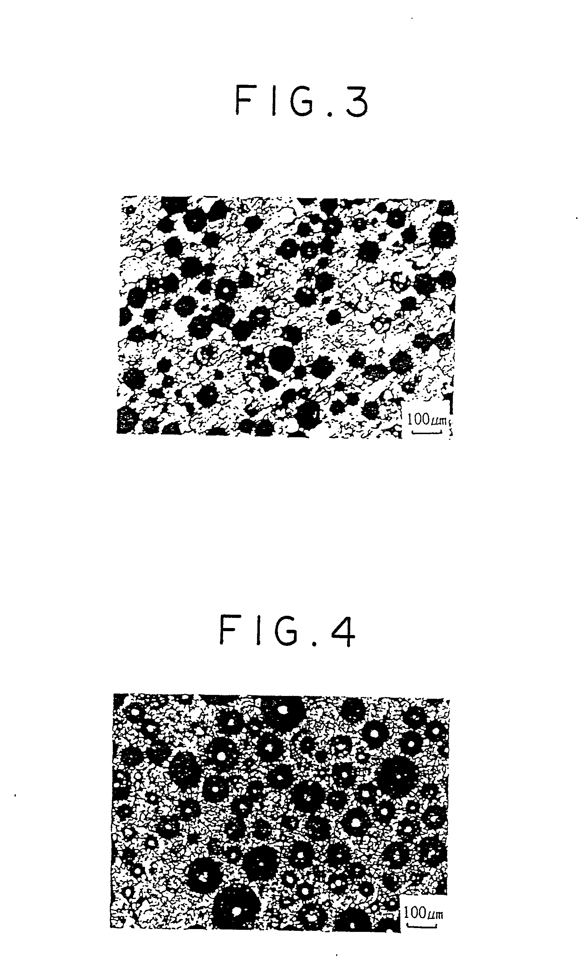

In Figs. 3 and 4, which are photomicrographs of polished surfaces of the first and second materials A and B, black circular portions represent microspheres, whereas the other portions represent matrix or matrix component which has flowed into microspheres broken during the manufacturing process for the composite material.

Modifications can readily be made to the processes described above.

For instance, although microspheres of a hollow type are employed in the examples, solid microspheres may be employed. In this case, advantages similar to those with the hollow microspheres can still be attained. Namely, the resultant composite material is decreased in weight due to the density difference between the matrix and the microsphere, and is reinforced by the microspheres, and is provided with damping function due to a rigidity difference between the two components. Further, the microspheres may be formed into clustered shapes other than a purely spherical shape.

In the first example, a composite billet was produced by means of an ordinary casting process followed by a forming process to obtain a final product. Alternatively, a die casting process may be used.

When it is difficult to obtain a matrix material in the form of powder, and a considerable density difference exists between the matrix and the microspheres which leads to difficulty in forming a uniform distribution of the microspheres in the molten matrix, a composite billet can be produced in the following manner: Namely, microspheres are added to a thin layer of molten matrix to be composited therewith, and the resultant composite layer is cooled to a temperature below which no fluidity of the layer is found. Thereafter, the operations of pouring new molten matrix to form a thin molten layer on the preceding thin composite layer and of adding the microspheres thereinto are repetitively carried out to obtain a laminated composite billet having a reasonably uniform distribution of the microspheres in the matrix. To improve the mechanical properties of a final product manufactured by the use of the billet of this kind, an appropriate heat treatment may be performed.

Ceramic powders and sintered metal powders may be employed as matrix powders. In this case, pressing and sintering should be performed under such pressure and temperature conditions that no fracture of microsphere occurs. Preset values for pressure and temperature may be set stepwise, where required, so as to ensure stability of the matrix. In such process, hot or cold isostatic pressing is useful.

Further, when producing a composite material for a product having a strict finish requirement of the order of several microns, such as in the case of a tape guide cylinder provided with a video head for use in a video tape recorder, a centrifugal forming process can be applied. According to this process, no microspheres, which could produce a rough finish, are distributed on the surface of the composite material or the cylinder, and the finish requirement is fulfilled.

The coating 3 formed on the outer surface of the microspheres 2 may consist of a material having one or more electromagnetic characteristics, which are different from those of the matrix, so as to provide the composite material with additional properties. For instance, a magnetic coating and an electrically conductive coating may be formed on the microspheres for use with a non-magnetic matrix and a non-conductive matrix, respectively.

Examples of the composite material and its method of production can produce the following advantages:

(i) Since the microspheres 2, especially when hollow and filled with a gas such as air, are light in weight, a reduction in weight of the composite material can be achieved in proportion to the mixing ratio of the microspheres.

(ii) Since the microspheres 2 dispersed in the matrix 1 generally maintain their integrity in the face of an external force or a change in temperature, improved tensile strength, ductility, heat resistance, etc. can be provided, without deterioration in mechanical properties.

(iii) Since vibration and noise are damped down due to rigidity differences between the microspheres 2 and the matrix 1 (in particular, due to the presence of a gas in the case of hollow microspheres), high damping ability of the resultant composite material can be provided.

(iv) Since the microspheres have a heat-insulating function, the resultant composite material has a high heat insulation ability.

(v) As compared with ordinary light metals and light metal alloys, manufacturing cost is reduced.

(vi) Since the composite material has various improved characteristics, it is applicable to various applications, such as buildings materials, structural materials for vehicles and aircraft, and parts of electrical or mechanical equipment. In particular, the composite material is suitable for use as a structural material of the platen of a printer. A metal product of a type floatable in water can be also produced.

(vii) Increased mechanical strength and additional properties can be provided by the use of microspheres formed with a desired coating.

(viii) Since a mixture of microspheres and matrix can be provided with suitable fluidity, with an uniform distribution of microspheres in the matrix kept unchanged. the composite material can be produced with ease in a stabilized manner.

**Claims**

1. A light metallic composite material, comprising: a matrix consisting of a light metallic material; and fine granular additive dispersed in said matrix, said additive having a density smaller than that of said matrix, and heat resistance enough to withstand a heating temperature at which said additive is composited with said matrix.

2. A composite material according to Claim 1, wherein additive for said material is provided in the form of hollow spheres.

3. A composite material according to Claims 1 to 2, wherein additive for said material is provided in the form of solid spheres.

4. A composite material according to any preceding claim, wherein additive for said material has a particle diameter less than 300 microns.

5. A composite material according to any preceding claim, wherein said matrix comprises aluminium, magnesium, zinc, or alloys of any of these materials, copper, brass, bronze, or light metal alloys.

6. A composite material according to any preceding claim, wherein additive for said material comprises one or more of: heat resistant glasses, preferably chosen from borosilicate glass, silica glass and silica-alumina-calcium glass; sintered metals; and ceramic materials preferably chosen from silica alumina and zirconia.

7. A composite material according to any preceding claim, wherein said additive is present in an amount of 10% to 70% by volume of said matrix.

8. A composite material according to any preceding claim, wherein said additive comprises particles the outer surface of which is provided with a coating.

9. A composite material according to Claim 8, wherein said coating consists of a metallic material.

10. A composite material according to Claim 9, wherein said metallic material consists of a metal which is materially intimate with said matrix.

11. A composite material according to Claim 9, wherein said metallic material consists of a metal which provides an electromagnetic characteristic different from that of said matrix.

12. A method of producing a light metallic composite material, comprising the steps of:

(a) adding fine granular additive to a light metallic matrix material, said additive having a density smaller than that of said matrix material;

(b) heating the mixture obtained in step (a) to a predetermined temperature so as to composite said additive with said matrix; and

(c) forming the composited mixture into a desired shape and solidifying same.

13. A method according to Claim 12, wherein additive is added to said matrix material in step (a) in an amount of 10% -70% by volume of said matrix material.

14. A method according to Claims 12 or 13, wherein said predetermined temperature is set to a value at which part of the mixture is softened and the remaining part thereof including said additive remains unmelted.

15. A method according to any of Claims 12, 13 or 14, wherein said matrix material consists of powder, and step (a) is followed by the step of mixing said additive with said powder.

# FIG.1

1    2

# FIG.2

3    2

# FIG.3

100μm

# FIG.4

100μm

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 781 170 (NAKAO et al.)<br><br>* Claims 1,2 * & FR-A-2 101 800, & GB-A-1 363 494, & DE-A-2 135 444 | 1,2,5, 6 | C 22 C 1/08 |
| X | * Claim 3 * | 7 | |
| X | * Column 5, example 4, lines 29-33; column 6, example 7, lines 43-45 * | 8,9 | |
| | --- | | |
| X | DE-A-2 218 455 (KUREHA KAGAKU KOGYO K.K.)<br>* Claims 1,5; page 9, first paragraph * | 1,2,5, 6 | TECHNICAL FIELDS SEARCHED (Int. Cl.4) |
| X | * Claims 7-9,11 * | 8,9 | C 22 C |
| X | * Claim 6 * | 4 | |
| | --- | | |
| X | US-A-3 297 431 (RIDGWAY)<br>* Claims 1-7 * | 1,5,12 | |
| | ---     -/- | | |

The present search report has been drawn up for all claims

| Place of search | Date of completion of the search | Examiner |
|---|---|---|
| THE HAGUE | 22-05-1987 | LIPPENS M.H. |

EPO Form 1503 03 82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 508 599 (VORDAHL)<br>* Claims 1-3 * | 1 | |

-----

TECHNICAL FIELDS SEARCHED (Int. Cl.4)

The present search report has been drawn up for all claims

| Place of search | Date of completion of the search | Examiner |
|---|---|---|
| THE HAGUE | 22-05-1987 | LIPPENS M.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503 03 82

# LLOYD WISE, TREGEAR & CO.

(Incorporating Tregear, Thiemann & Bleach and Lloyd Wise, Boult & Haig)

EUROPEAN PATENT ATTORNEYS      CHARTERED PATENT AGENTS

D. E. P. HAYWARD, B.Sc. (LOND.), A.C.G.I., C.P.A.
G. H. B. TREGEAR, M.A. (CANTAB.), C.P.A., M.I.T.M.A.
O. J. R. ALLEN, M.A. (CANTAB.), C.P.A., M.I.T.M.A.
P. A. W. THIEMANN, B.Sc. (LOND.) A.C.G.I., C.P.A., M.I.T.M.A.
P. C. ALLAM, B.Sc. (SOTON), C.P.A.
A. C. RACKHAM, B.Sc., C.P.A.
M. J. P. DEANS, M.A. (CANTAB.), C.P.A., M.I.T.M.A.
P. A. BOWMAN, B.Sc., C.P.A.

———

J. W. BLUFF, B.Sc. (ENG.), C.P.A.
E. A. HITCHCOCK, B.Sc., C.P.A.
C. A. MICKLEWRIGHT, B.Sc. (DUNELM), C.P.A.

NORMAN HOUSE,
105-109 STRAND,
LONDON WC2R OAE

TELEPHONE: 01-836 0986 & 01-240 1158
TELEGRAMS: LLOYDWISE, LONDON WC2R OAE
TELEX:     267675 LDWISE G
FACSIMILE:   01 836 6158 GROUPS II AND III

Address for local representation at the European Patent Office

ZWEIBRUCKENSTRASSE 17,
D-8000 MUNCHEN 2

TELEPHONE: (089) 22 25 97
TELEX:     5 22 054

OUR REF. MJPD/PAK/31706

YOUR REF.

The European Patent Office      6 April 1987
Receiving Section
P.B. 5816 Patentlaan 2
2280 HV Rijswijk ZH
The Hague
The Netherlands

Dear Sirs,

Re:   European Patent Application No. 87300575.5
     <u>INABATA TECHNO LOOP CORPORATION</u> – Our Folio:31706

We are in receipt of your communication of 30 March 1987
issued as a result of the Examination as to formal requirements
under Article 91 Paragraph 1(a) EPC in which you request
that an Authorisation be filed pursuant to Rule 41, paragraph
1 and Rule 101 EPC.

It would appear that the letter of 30 March 1987 has been
issued in error. Enclosed is a copy of our letter of 30 January
1987.

May we have your assurance that all is well?

Our attention has been drawn to an obvious clerical error on
Page 7 where the average Vickers hardness number for the
ten samples of composite material A, the values of which
are set out, is suggested to be 23.2468. This is obviously
wrong. The correct figure should be "25.4468"; we trust that
a suitable opportunity will be allowed to make this obvious
correction.

Yours faithfully,

M.J.P. DEANS

ENC

Associated with: LLOYD WISE & CO.
2606 Alexandra House, 16-20 Chater Road, Hong Kong.    Telegrams: LDWISE HONG KONG.    Telex: 76227 LYDWS HX.